# EUROPÄISCHE PATENTSCHRIFT

(11) **EP 0 573 036 B1**
(45) Veröffentlichungstag und Bekanntmachung des Hinweises auf die Patenterteilung: **22.05.1996**
(21) Anmeldenummer: 93108934.6
(22) Anmeldetag: 03.06.1993
(51) Int. Cl.: C04B 24/32, C08L 27/06, C08L 31/02, C08L 33/06

(54) **Verwendung von Polypropylenglykol als Schwindmass-reduzierender Zusatz in Dispersionspulver-Zusammensetzungen für Baustoffe**
Use of polypropylene glycol as additive for reducing the amount of shrinkage in dispersion powder compositions for building materials
Utilisation de glycole de polypropylène en tant qu'additif réduisant la côte de retrait dans des compositions de poudre de dispersion pour matériaux de construction

(30) Priorität: 04.06.1992 DE 4218493
(43) Veröffentlichungstag der Anmeldung: 08.12.1993
(73) Patentinhaber: Wacker-Chemie GmbH, D-81737 München (DE)
(72) Erfinder: Schulze, Joachim, Dr., W-8263 Burghausen (DE); Figge, Rainer, Dr., W-8261 Ampfing (DE)

(56) Entgegenhaltungen:
- EP-A- 0 116 524
- EP-A- 0 308 950
- EP-A- 0 407 889
- EP-A- 0 477 900
- DE-A- 2 614 261
- FR-A- 2 110 988
- US-A- 4 587 279
- TIZ TONINDUSTRIE-ZEITUNG Bd. 109, Nr. 9, 1985, COBURG D Seiten 698 - 703 DR. J SCHULZE

## Beschreibung

Die Erfindung betrifft die Verwendung von Polypropylenglykol als Schwindmaß-reduzierender Zusatz in Dispersionspulver-Zusammensetzungen für Baustoffe, insbesondere Trockenmörteln, die Portland-Zement als anorganisches Bindemittel enthalten.

Dispersionspulver sind an sich nicht neu und werden seit vielen Jahren gerade im Bausektor als Kunststoffvergütung von hydraulisch abbindenden Systemen eingesetzt. Eine Übersicht über die Wirkung von Dispersionspulvern in solchen Baustoffen wird in der Zeitschrift Tonindustrie TIZ 9, 1985, S. 698, gegeben. Wesentliche Verbesserungen in den Eigenschaften Haftung, Abriebsbeständigkeit, Kratzfestigkeit, Biegezugfestigkeit werden durch den Zusatz erzielt.

Dispersionspulver werden durch Sprühtrocknung wäßriger Polymerdispersionen unter Zusatz von Polyvinylalkohol und anderer Additive hergestellt. Das gut rieselfähige Pulver mit Teilchengrößen zwischen 10 und 250 µm redispergiert in Wasser wieder zur ursprünglichen Dispersion mit Teilchengrößen zwischen 0,1 und 5 µm. Die Redispersionen sollten auch über einen längeren Zeitraum stabil sein, d. h. sie sollten nicht zum Absitzen neigen.

Solche Dispersionspulver sind beispielsweise in EP-A 228 657, DE-OS 26 14 261 oder der DE-PS 20 49 114 beschrieben.

Die EP-A 407 889 beschreibt Dispersionspulver auf Basis wasserlöslicher Salze von Phenolsulfonsäure-Formaldehyd-Kondensationsprodukten als Verdüsungskolloid.

Der große Vorteil von Dispersionspulvern gegenüber den gleichfalls alternativ einsetzbaren flüssigen Dispersionen ist, daß man Trockenmörtelmischungen herstellen kann, die an der Baustelle nur noch mit Wasser angemischt werden müssen. Das bringt viele Vorteile wie erhöhte Arbeitssicherheit, sichere Handhabung oder einfache Gebindeentsorgung.

Eine der negativen Eigenschaften von Zement, insbesondere des zumeist benutzten Portland-Zementes, stellt das Schwinden oder Schrumpfen der hydraulischen Massen dar, das zu Volumenänderungen der abbindenden Mörtel oder Betone führt. Werden diese Volumenänderungen zu groß, kann das zur Rißbildung in den Baustoffen führen. Man ist daher bestrebt, die Schwindneigung möglichst klein zu halten.

Standarddispersionspulver, bestehend aus den Komponenten Dispersion, Verdüsungskolloid Polyvinylalkohol oder Phenolsulfonsäure-Formaldehyd-Kondensationsprodukten, relativ geringen Mengen Additiven und Antiblockmittel, wie in der EP-A 228 657 oder der EP-A 407 889 führen in Baustoffen, die Portland-Zement als anorganisches Bindemittel enthalten, zu einer Erhöhung des Schwindens des Materials.

Man kann zwar über den Rezepturaufbau, durch Verwendung von Schwindverhinderungsmitteln, das Schwinden reduzieren. Da aber Trockenmörtel hergestellt werden sollen, benötigt man in der Regel pulverförmige Materialien. Ein Aufsprühprozess, der prinzipiell technisch möglich ist, ist aufwendig und teuer. Die DE-A 37 32 114 beschreibt pulverförmige Materialien auf Basis von Alkandiolen mit endständigen OH-Gruppen. Diese Materialien haben den Nachteil, daß sie hygroskopisch und meist nicht geruchsneutral sind.

In der JP-A-73 43 014 (C.A. 79: 96272v) wird vorgeschlagen, sekundäre oder tertiäre Alkohole, speziell Glycerin, zementhaltigen Massen zur Vermeidung des Schrumpfens zuzusetzen. Nachteilig bei Verwendung dieser Verbindungen als Zementzusatz ist jedoch die sehr starke Verzögerung der Abbindung der hydraulischen Massen, die ihren Grund in dem hygroskopischen Verhalten dieser Verbindungen hat; zudem sind diese Produkte flüssig.

In der JP-A-59 128 240 (C.A. 101: 176465y) sind Polyoxyethylenether mit einer endständigen OH-Gruppe als Schwindmaß-reduzierende Zusätze in Gemischen mit Fluor-haltigen Emulgatoren beschrieben. Nachteilig ist, daß es sich hierbei um flüssige und separat zur Trockenmörtelmischung zu dosierende Zusatzstoffe handelt.

Die EP-A2 116 524 beansprucht die Verwendung von Gips zur Reduzierung des Schwindens. Nachteilig bei dieser Verfahrensweise ist, daß bei Verwendung von Gips in Kombination mit Portland-Zement immer die Gefahr des Gipstreibens besteht, wobei die gesamte Festigkeit des Baustoffes verlorengehen kann (Czernin, Zementchemie für Bauingenieure, Bauverlag).

Polyalkylenglykole wurden bisher in geringen Mengen (DE-OS 40 30 638: 0.1 bis 2 Gew%) als Entschäumer den Dispersionspulver-Zusammensetzungen zugegeben.

Es bestand daher die Aufgabe, ein Dispersionspulver herzustellen, das den Nachteil von Standarddispersionspulvern nicht hat, das Schwundverhalten von Baustoffen, insbesondere Trockenmörteln, die Portland-Zement als anorganisches Bindemittel enthalten, negativ zu beeinflussen, ohne die Vorteile, die der Zusatz von Dispersionspulver in Baustoffen erbringt, zu verlieren.

Überraschenderweise konnte die Aufgabe durch die Verwendung von Polypropylenglykol als Komponente der Dispersionspulverzusammensetzung gelöst werden.

Gegenstand der Erfindung ist die Verwendung von Polypropylenglykol als Schwindmaß-reduzierender Zusatz in Dispersionspulver-Zusammensetzungen für Baustoffe enthaltend
a) ein Basispolymerisat aus der Gruppe der Vinylester-Polymerisate, (Meth)Acrylat- und/oder Styrol-(Co)Polymerisate und Vinylchlorid-Polymerisate, und
b) entweder
   b1) 2 bis 20 Gew%, bezogen auf das Basispolymerisat, Polyvinylalkohol mit einem Hydrolysegrad von 85 bis 94 Mol% und einer Höpplerviskosität von 2 bis 40 mPa.s oder
   b2) 2 bis 20 Gew%, bezogen auf das Basispolymerisat, Alkali- oder Erdalkalisalze von Phenolsulfonsäure-Formaldehyd-Kondensationsprodukten, sowie
c) 3 bis 30 Gew%, bezogen auf das Gesamtgewicht polymerer Bestandteile, feines Antiblockmittel,
dadurch gekennzeichnet, daß
d) 1 bis 20 Gew%, bezogen auf das Basispolymerisat, Polypropylenglykol enthalten ist.

Als Basispolymerisat geeignete Vinylester-Polymerisate sind Vinylacetat-Homopolymere oder Copolymere des Vinylacetats mit Ethylen und/oder Vinylchlorid und/oder weiteren Vinylestern, wie Vinyllaurat, Versaticsäurevinylestern, Vinylpivalat und/oder Estern von Maleinsäure/Fumarsäure. Geeignet sind auch Homopolymerisate von Vinylestern von gesättigten C₃ - C₈ Alkylcarbonsäuren oder deren Copolymerisate mit Ethylen, Vinylchlorid und/oder weiteren Vinylestern. Die (Meth)Acrylat- und/oder Styrol-(Co)Polymerisate leiten sich von Polymerisaten aus Styrol und/oder Estern der Acrylsäure und/oder Methacrylsäure mit geradkettigen, verzweigten oder cyclischen aliphatischen Alkoholen mit 1 bis 20 C-Atomen ab. Als Vinylchlorid-Polymerisate sind Vinylchlorid-Ethylen-Copolymere geeignet.

Vorzugsweise eingesetzt werden Vinylacetat-Homopolymere und Vinylacetat-Ethylen-Copolymere mit einem Ethylengehalt von 1 bis 40 Gew%, welche gegebenenfalls noch 0 bis 40 Gew% weitere Vinylester und/oder Vinylchlorid enthalten. Bevorzugt sind auch Styrol-Acrylate wie Styrol-Butylacrylat oder Styrol-Ethylhexylacrylat mit einem Styrolgehalt von 1 bis 70 Gew%. Weitere bevorzugte Basispolymerisate sind Vinylchlorid-Ethylen-Copolymerisate, welche gegebenenfalls noch Vinylester von gesättigten C₃-C₈ Alkylcarbonsäuren enthalten.

Die Komponente b) der Dispersionspulver-Zusammensetzung besteht entweder aus Komponente b1) oder Komponente b2). Als Komponente b1) werden wasserlösliche Polymere, vorzugsweise 5 bis 20 Gew% Polyvinylalkohol mit einem Hydrolysegrad von 85 bis 94 Mol% und einer Höppler-Viskosität, bestimmt in 4%-iger Lösung, von 3 bis 25 mPa.s, eingesetzt. Als Komponente b2) werden bevorzugt Alkali- oder insbesondere Erdalkalisalz von Phenolsulfonsäure-Formaldehyd-Kondensationsprodukten mit 1 Formaldehydrest je Phenolrest und 1 Sulfonsäuregruppe je Molekül eingesetzt. Insbesonders wird in der Dispersionspulverzusammensetzung Komponente b1) eingesetzt.

Der Anteil an Antiblockmittel c) beträgt vorzugsweise 4 bis 20 Gew%. Besonders bevorzugt sind Antiblockmittel mit mittleren Teichengrößen von 0,1 bis 50 µm. Beispiele für Antiblockmittel sind fein gemahlene Aluminiumsilikate, Kieselgur, pyrogen erzeugtes Siliciumdioxyd, Fällungskieselsäure, kolloidales Silicagel, Micro-Silica, Leichtspat, Kaolin, Talkum, Zemente, Diatomeenerde, Calciumcarbonat oder Magnesiumhydrosilikate.

Polypropylenglykol d), das vorzugsweise in Mengen von 1 bis 10 Gew%, besonders bevorzugt 2 bis 8 Gew%, bezogen auf das Basispolymerisat, eingesetzt wird, besitzt ein Molekulargewicht von 300 bis 30 000, bevorzugt 500 bis 5 000. Diese Produkte sind kommerziell erhältlich und werden zum Beispiel von der Fa. Hoechst AG unter dem Handelsnamen Polyglykole B01 vertrieben. Es können auch Mischungen unterschiedlicher Polypropylenglykole eingesetzt werden.

Die Dispersionspulverzusammensetzung kann gegebenenfalls noch weitere Zusatzstoffe enthalten.

So können noch 0 bis 30 Gew%, bezogen auf das Polymerharz von Dispersion, Zementverflüssiger, bevorzugt sulfonatgruppenhaltige Kondensationsprodukte aus Melamin bzw. Keton und Formaldehyd und/oder Naphtalinsulfonsäure-Formaldehyd- und/oder Phenolsulfonat-Formaldehyd-Kondensationsprodukte enthalten sein.

Gegebenenfalls können auch noch 0 bis 10 Gew%, bezogen auf das Polymerharz, vollverseifte Copolymere aus 1-Alkylvinylester und Vinylester mit einer Köpplerviskosität von 1 bis 25 mPa.s, bestimmt in 4%-iger Lösung, enthalten sein. Das vollverseifte Copolymer aus Alkylvinylester und Vinylacetat enthält vorzugsweise 5 bis 25 Mol% Alkylvinylester, wobei besonders bevorzugt der Alkylvinylester Isopropenylacetat ist.

Gegebenenfalls können auch noch 0 bis 1 Gew.%, bevorzugt 0 bis 0,6 Gew.%, bezogen auf das Polymerharz, oberflächenaktive Substanz(en), wie Emulgatoren oder Netzmittel, enthalten sein. Beispiele hierfür sind anionische Tenside sowie nichtionische Tenside, beispielsweise Alkylpolyglykole bzw. Ethylenoxid-Propylenoxid-Copolymere.

Gegebenenfalls können auch noch 0 bis 2 Gew%, bezogen auf das Polymerharz, Entschäumer enthalten sein. Geeignete Entschäumer sind die am Markt erhältlichen Produkte, die sich für den Einsatz in hydraulisch abbindenden Systemen bewährt haben. Beispiele sind Silicon-Entschäumer oder Entschäumer auf Basis von flüssigen Kohlenwasserstoffen.

Zur Herstellung der Dispersionspulverzusammensetzung wird das Basispolymerisat als wäßrige Dispersion eingesetzt. Dieser Dispersion wird die Polyvinylalkoholkomponente b1) oder Phenolsulfonsäure-Formaldehyd-Kondensationsprodukt b2), bevorzugt b1), zugesetzt. Vorzugsweise wird eine wäßrige Lösung eingesetzt, wobei sich über die verwendete Wassermenge die Viskosität der Dispersion steuern läßt. Polypropylenglykol d) liegt in flüssiger Form vor und wird als solches in die Dispersion eingemischt. Diese Mischvorgänge können in beliebiger Reihenfolge ablaufen, wichtig ist nur, daß eine homogene Dispersions-Mischung vorliegt. Die gegebenenfalls einzusetzenden Zementverflüssiger, vollverseifte 1-Alkylvinylester/Vinylester-Copolymere, oberflächenaktive Substanzen, Entschäumer, werden vorzugsweise vor der Trocknung dem in Dispersion vorliegenden Gemisch zugegeben.

Nach Vermischung der Komponenten wird die Dispersion getrocknet, vorzugsweise sprüh- oder gefriergetrocknet, besonders bevorzugt sprühgetrocknet. Hierbei kann auf bekannte Vorrichtungen, wie zum Beispiel Versprühen durch Mehrstoffdüsen oder mit der Scheibe in einem gegebenenfalls erhitzten Trockengasstrom zurückgegriffen werden. Im allgemeinen werden Temperaturen über 250°C nicht angewandt. Die optimale Temperatur des Trockengases kann in wenigen Versuchen ermittelt werden; oft haben sich Temperaturen über 60°C besonders bewährt.

Zur Erhöhung der Lagerfähigkeit und um zum Beispiel bei Pulvern mit niedriger Glasübergangstemperatur ein Verbacken und Verblocken zu verhindern, wird das erhaltene Pulver mit dem Antiblockmittel (Antibackmittel) c) versetzt. Dies erfolgt vorzugsweise solange das Pulver noch fein verteilt ist, zum Beispiel noch im Trockengas suspendiert ist. Insbesondere wird das Antibackmittel getrennt, aber gleichzeitig mit der Dispersion in die Trocknungsvorrichtung dosiert.

Die erfindungsgemäße redispergierbare Dispersionspulver-Zusammensetzung eignet sich besonders zum Einsatz in Baustoffen, die Portland-Zement als anorganisches Bindemittel enthalten, insbesondere Trockenmörteln, und führt dort im Vergleich zu einem Dispersionspulver, das kein Polypropylenglykol enthält, zu einem geringeren Schwinden des Mörtels. Die erfindungsgemäße Dispersionspulver-Zusammensetzung kann mit Erfolg auch in Gipsbaustoffen, Kalkmörteln, Klebstoffen oder Farben eingesetzt werden.

Die folgenden Beispiele zeigen den keineswegs vorhersehbaren technischen Vorteil der erfindungsgemäßen Dispersionspulver-Zusammensetzung.

### Beispiele:

### Verwendete Substanzen:

### Dispersion LL 1:

Mit Polyvinylalkohol stabilisierte wäßrige Dispersion mit einem Festgehalt von 50 % auf der Basis eines Vinylacetat-Ethylen-Copolymers mit einem Vinylacetatgehalt von 78 Gew% und einem Ethylengehalt von 22 Gew% der Wacker-Chemie GmbH.

### Dispersion LL 2:

Mit Polyvinylalkohol stabilisierte wäßrige Dispersion mit einem Festgehalt von 50 % auf Basis eines Ethylen-Vinylchlorid-Vinyllaurat-Terpolymerisats mit einem Ethylengehalt von 17 Gew%, einem Vinylchloridgehalt von 70 Gew% und einem Vinyllauratgehalt von 13 Gew% der Wacker-Chemie GmbH.

### Dispersion LL 3:

Mit Polyvinylalkohol stabilisierte wäßrige Dispersion mit einem Festgehalt von 50 % auf der Basis eines Styrol-Acrylat-Copolymers mit einem Styrolgehalt von 50 Gew% und einem Butylacrylatgehalt von 50 Gew% der Wacker-Chemie GmbH.

### Dispersion LL 4:

Mit Acrylamid stabilisierte wäßrige Dispersion mit einem Festgehalt von 50 % auf der Basis eines Styrol-Acrylat-Copolymers mit einem Styrolgehalt von 50 Gew% und einem Butylacrylatgehalt von 50 Gew% der Wacker-Chemie GmbH.

### Polyviol M 05/140:

Polyvinylalkohol mit einer Höppler-Viskosität von 5 mPa.s, in 4 %iger Lösung, und einer Verseifungszahl von 140 (= Hydrolysegrad von 88 Mol%) der Wacker-Chemie GmbH.

### Polyviol M 13/140:

Polyvinylalkohol mit einer Höppler-Viskosität von 13 mPa.s, in 4 %iger Lösung, und einer Verseifungszahl von 140 (= Hydrolysegrad von 88 Mol%) der Wacker-Chemie GmbH.

### PME:

Vollverseiftes Copolymer aus Isopropenylacetat und Vinylacetat (Abk. PME) mit einer Höpplerviskosität von 2,5 mPa.s, in 4%-iger Lösung, und einem Isopropenylacetatanteil von 20 Mol% der Wacker-Chemie GmbH

### B01/20

Polypropylenglykol mit einem Molekulargewicht von 700 der Fa. Hoechst AG.

### B01/40

Polypropylenglykol mit einem Molekulargewicht von 1100 der Fa. Hoechst AG.

### B01/80

Polypropylenglykol mit einem Molekulargewicht von 1400 der Fa. Hoechst AG.

### Hydresol PNP 50

Ein Phenolsulfonat-Formaldehydkondensat der Fa. BASF AG.

### Agitan 305

Entschäumer auf Basis von flüssigen Kohlenwasserstoffen der Fa. Münzing Heilbronn.

### Beispiel 1 (erfindungsgemäß)

4000 Gew.-Teile Vinnapas-Dispersion LL 1, 500 Gew.-Teile Polyviol M 05/140 als 20 %ige Lösung in Wasser (5 % auf LL 1 Harz), 1000 Gew.-Teile Polyviol M 13/140 als 10 %ige Lösung in Wasser (5 % auf LL 1 Harz), 10 Gew.-Teile Agitan 305 (0,5 % auf LL 1 Harz), 320 Gew.-Teile PME als 25 %ige Lösung in Wasser (4 % auf LL 1 Harz), 60 g Polypropylenglykol B 01/10 (3 % bezogen auf LL 1 Harz) und 500 Gew.-Teile Wasser wurden gründlich gemischt. Die Mischung wurde durch eine Zweistoffdüse versprüht. Als Verdüsungskomponente diente auf 4 bar vorgepreßte Luft, die gebildeten Tropfen wurden mit auf 125 Grad Celsius erhitzter Luft im Gleichstrom getrocknet. Das erhaltene trockene Pulver wurde mit 10 Gew% handelsüblichem Antiblockmittel (Gemisch aus Calcium-Magnesium-Carbonat und Magnesiumhydrosilikat) versetzt.

### Vergleichsbeispiel A

Die Herstellung des Dispersionspulvers erfolgte gemäß Beispiel 1, jedoch wurde kein Polypropylenglykol B 01/10 eingesetzt.

### Beispiel 2 (erfindungsgemäß)

Es wurde wie in Beispiel 1 gearbeitet, doch statt Polypropylenglykol B 01/10 wurde B 01/20 eingesetzt.

### Beispiel 3 (erfindungsgemäß)

Es wurde wie in Beispiel 1 gearbeitet, doch statt Polypropylenglykol B 01/10 wurde B 01/40 eingesetzt.

### Beispiel 4 (erfindungsgemäß)

Es wurde wie in Beispiel 1 gearbeitet, doch statt Polypropylenglykol B 01/10 wurde B 01/80 eingesetzt.

### Beispiel 5 (erfindungsgemäß)

4000 Gew.-Teile Vinnapas-Dispersion LL 3, 500 Gew.-Teile Polyviol M 05/140 als 20 %ige Lösung in Wasser (5 % auf LL 3 Harz), 1000 Gew.-Teile Polyviol M 13/140 als 10 %ige Lösung in Wasser (5 % auf LL 3 Harz), 10 Gew.-Teile Agitan 305 (0,5 % auf LL 3 Harz), 20 g Polypropylenglykol B 01/80 (1 % bezogen auf LL 3 Harz) und 500 Gew.-Teile Wasser wurden gründlich gemischt. Die Mischung wurde durch eine Zweistoffdüse versprüht. Als Verdüsungskomponente diente auf 4 bar vorgepreßte Luft; die gebildeten Tropfen wurden mit auf 125°C erhitzter Luft im Gleichstrom getrocknet. Das erhaltene trockene Pulver wurde mit 10 Gew.-% handelsüblichem Antiblockmittel (Gemisch aus Calcium-Magnesium-Carbonat und Magnesiumhydrosilikat) versetzt.

### Beispiel 6 (erfindungsgemäß)

Es wurde wie in Beispiel 5 gearbeitet, es wurden aber 60 g Polypropylenglykol B 01/80 eingesetzt (3 % bezogen auf LL 3 Harz).

### Beispiel 7 (erfindungsgemäß)

Es wurde wie in Beispiel 5 gearbeitet, es wurden aber 100 g Polypropylenglykol B 01/80 eingesetzt (5 % bezogen auf LL 3 Harz).

### Vergleichsbeispiel B

Die Herstellung des Dispersionspulvers erfolgte gemäß Beispiel 5, jedoch wurde kein Polypropylenglykol B 01/80 eingesetzt.

### Beispiel 8 (erfindungsgemäß)

4000 Gew.-Teile Vinnapas-Dispersion LL 2, 500 Gew.-Teile Polyviol M 05/140 als 20 %ige Lösung in Wasser (5 % auf LL 2 Harz), 1000 Gew.-Teile Polyviol M 13/140 als 10 %ige Lösung in Wasser (5 % auf LL 2 Harz), 10 Gew.-Teile Agitan 305 (0,5 % auf LL 2 Harz), 60 g Polypropylenglykol B 01/40 (1 % bezogen auf LL 2 Harz) und 500 Gew.-Teile Wasser wurden gründlich gemischt. Die Mischung wurde durch eine Zweistoffdüse versprüht. Als Verdüsungskomponente diente auf 4 bar vorgepreßte Luft. Die gebildeten Tropfen wurden mit auf 125°C erhitzter Luft im Gleichstrom getrocknet. Das erhaltene trockene Pulver wurde mit 10 Gew.-% handelsüblichem Antiblockmittel (Gemisch aus Calcium-Magnesium-Carbonat und Magnesiumhydrosilikat) versetzt.

### Vergleichsbeispiel C

Die Herstellung des Dispersionspulvers erfolgte gemäß Beispiel 8, jedoch wurde kein Polypropylenglykol B 01/40 eingesetzt.

### Beispiel 9 (erfindungsgemäß)

4000 Gew.-Teile Vinnapas-Dispersion LL 4, 1000 Gew.-Teile Hydresol PNP 50 (Phenolsulfonat-Formaldehydkondensat der Fa. BASF AG) als 20 %ige Lösung in Wasser (10 % auf LL 4 Harz), 60 g Polypropylenglykol B 01/40 (3 % bezogen auf LL 4 Harz) wurden gründlich gemischt. Die Mischung wurde durch eine Zweistoffdüse versprüht. Als Verdüsungskomponente diente auf 4 bar vorgepreßte Luft, die gebildeten Tropfen wurden mit auf 125°C erhitzter Luft im Gleichstrom getrocknet. Das erhaltene trockene Pulver wurde mit 10 Gew% handelsüblichem Antiblockmittel (Gemisch aus Calcium-Magnesium-Carbonat und Magnesiumhydrosilikat) versetzt.

### Vergleichsbeispiel D

Die Herstellung des Dispersionspulvers erfolgte gemäß Beispiel 9, jedoch wurde kein Polypropylenglykol B 01/40 eingesetzt.

### Anwendungstechnische Untersuchungen

### Schwindprüfung

Die Prüfung des Schwindens wurde nach DIN 52 450 durchgeführt. Dazu wurden Mörtelprismen mit 160x40x40mm nach DIN 1164 aus einer Mischung aus 25 Gew.-Teilen Portland-Zement 35F und 75 Gew.-Teilen Normsand hergestellt. Bei der Herstellung wurde generell mit einem Zusatz von 0,2 Gew% eines pulverförmigen Entschäumers Agitan P 801 der Fa. Münzing Heilbronn gearbeitet. Die Mischung aus Zement, Sand und pulverförmigem Entschäumer wurde mit den Dispersionspulvern aus den Beispielen bzw. Vergleichsbeispielen zu einem Trockenmörtel gemischt. Die Menge des Dispersionspulvers wurde in Gew.-Teilen auf Zement bezogen angegeben. (Kunststoff-Zementfaktor KZ; KZ = 0,1 bedeutet 10 Gew% Dispersionspulver auf eingesetzte Zementmenge). Der Trockenmörtel wurde mit Wasser angemischt. Dabei wurde ein Wasser-Zementfaktor WZ von 0,45 eingehalten. Das Schwindmaß wurde in mm/m = Promille angegeben. Die Ausschalung der Prüfkörper erfolgte jeweils einen Tag nach Füllung der Schalung. Die Schalung wurde während dieser Zeit abgedeckt.

In Tabelle 1 sind die Ergebnisse für das Schwindmaß der, unter Einsatz der (vergleichs)beispielsgemäßen Dispersionspulver, hergestellten Prüfkörper zusammengefaßt.

**TABELLE 1**

| **Dispersionspulver** | **Kunststoffzementfaktor KZ** | **Schwindmaß 28 Tage (mm/m)** |
|---|---|---|
| Serie 1 | | |
| Beispiel 1 | 0,1 | 0,86±0,02 |
| Vergl.bsp. A | 0,1 | 1,04±0,03 |
| Beispiel 2 | 0,1 | 0,89±0,02 |
| Beispiel 3 | 0,1 | 0,89±0,04 |
| Beispiel 4 | 0,1 | 0,91±0,02 |

| Serie 2 | | |
|---|---|---|
| Beispiel 5 | 0,1 | 0,81±0,02 |
| Beispiel 6 | 0,05 | 0,77±0,01 |
| Beispiel 6 | 0,1 | 0,74±0,03 |
| Beispiel 6 | 0,15 | 0,68±0,02 |
| Beispiel 7 | 0,1 | 0,71±0,02 |
| Vergl.bsp. B | 0,1 | 0,85±0,02 |

| Serie 3 | | |
|---|---|---|
| Beispiel 8 | 0,1 | 0,75±0,03 |
| Vergl.bsp. C | 0,1 | 0,97±0,02 |
| Beispiel 9 | 0,1 | 0,92±0,02 |
| Vergl.bsp. D | 0,1 | 1,04±0,03 |

## Patentansprüche

1. Verwendung von Polypropylenglykol als Schwindmaß-reduzierender Zusatz in Dispersionspulver-Zusammensetzungen für Baustoffe enthaltend
a) ein Basispolymerisat aus der Gruppe der Vinylester-Polymerisate, (Meth)Acrylat- und/oder Styrol-(Co)Polymerisate und Vinylchlorid-Polymerisate, und
b) entweder
b1) 2 bis 20 Gew%, bezogen auf das Basispolymerisat, Polyvinylalkohol mit einem Hydrolysegrad von 85 bis 94 Mol% und einer Höpplerviskosität von 2 bis 40 mPa.s oder
b2) 2 bis 20 Gew%, bezogen auf das Basispolymerisat, Alkali- oder Erdalkalisalze von PhenolsulfonsäureFormaldehyd-Kondensationsprodukten, sowie
c) 3 bis 30 Gew%, bezogen auf das Gesamtgewicht polymerer Bestandteile, feines Antiblockmittel,
dadurch gekennzeichnet, daß
d) 1 bis 20 Gew%, bezogen auf das Basispolymerisat, Polypropylenglykol enthalten sind.

2. Verwendung nach Anspruch 1, dadurch gekennzeichnet, daß das Polypropylenglykol d) in Mengen von 2 bis 8 Gew%, bezogen auf das Basispolymerisat, eingesetzt wird.

3. Verwendung nach Anspruch 1 oder 2, dadurch gekennzeichnet, daß das Polypropylenglykol d) ein Molekulargewicht von 300 bis 30 000 besitzt.

4. Verwendung nach Anspruch 1 bis 3, dadurch gekennzeichnet, daß als Basispolymerisat Vinylacetat-Ethylen-Copolymerisate, welche gegebenenfalls noch weitere Vinylester und/oder Vinylchlorid enthalten, oder Vinylchlorid-Ethylen-Copolymerisate, welche gegebenenfalls noch Vinylester von gesättigten C₃-C₈-Alkylcarbonsäuren enthalten, oder Styrol-Acrylat-Copolymerisate eingesetzt werden.

5. Verwendung nach Anspruch 1 bis 4, dadurch gekennzeichnet, daß noch bis zu 30 Gew%, bezogen auf das Basispolymerisat, Zementverflüssiger eingesetzt werden.

6. Verwendung nach Anspruch 1 bis 5, dadurch gekennzeichnet, daß noch bis zu 10 Gew%, bezogen auf das Basispolymerisat, vollverseifte Copolymere aus 1-Alkylvinylester und Vinylester mit einer Höpplerviskosität von 1 bis 25 mPa.s, bestimmt in 4 %iger Lösung, eingesetzt werden.

7. Verwendung nach Anspruch 1 bis 6, dadurch gekennzeichnet, daß noch bis zu 2 Gew%, bezogen auf das Basispolymerisat, Entschäumer eingesetzt werden.

8. Verwendung nach Anspruch 1 bis 7, dadurch gekennzeichnet, daß die redispergierbare Dispersionspulver-Zusammensetzung in Trockenmörteln, die Portland-Zement als anorganisches Bindemittel enthalten, verwendet wird.

## Claims

1. Use of polypropylene glycol as a shrinkage-reducing additive in dispersion powder compositions for construction materials containing
a) a base polymer from the group consisting of vinyl ester polymers, (meth)acrylate and/or styrene (co)polymers and vinyl chloride polymers, and
b) either
b1) 2 to 20% by weight, based on the base polymer, of polyvinyl alcohol having a degree of hydrolysis of 85 to 94 mol% and a Höppler viscosity of 2 to 40 mPa.s or
b2) 2 to 20% by weight, based on the base polymer, of alkali metal salts or alkaline earth metal salts of phenolsulphonic acid formaldehyde condensation products, and
c) 3 to 30% by weight, based on the total weight of polymeric components, of fine antiblocking agents,
characterized in that
d) the content of polypropylene glycol is 1 to 20% by weight, based on the base polymer.

2. Use according to Claim 1, characterized in that the polypropylene glycol d) is used in quantities of 2 to 8% by weight, based on the base polymer.

3. Use according to Claim 1 or 2, characterized in that the polypropylene glycol d) has a molecular weight of 300 to 30,000.

4. Use according to Claims 1 to 3, characterized in that vinyl acetate-ethylene copolymers which, if appropriate, also contain further vinyl esters and/or vinyl chloride, or vinyl chloride-ethylene copolymers, which, if appropriate, also contain vinyl esters of saturated C₃-C₈ alkylcarboxylic acids, or styrene-acrylate copolymers are used as base polymers.

5. Use according to Claims 1 to 4, characterized in that up to 30% by weight, based on the base polymer, of cement thinner are used.

6. Use according to Claims 1 to 5, characterized in that up to 10% by weight, based on the base polymer, of completely saponified copolymers of 1-alkylvinyl esters and vinyl esters with a Höppler viscosity of 1 to 25 mPa.s, determined in 4% strength solution, are also used.

7. Use according to Claims 1 to 6, characterized in that up to 2% by weight, based on the base polymer, of foaming inhibitors are also used.

8. Use according to Claims 1 to 7, characterized in that the redispersible dispersion powder composition is used in dry mortars which contain Portland cement as inorganic binder.

## Revendications

1. Utilisation de polypropylèneglycol comme additif réduisant la cote de retrait dans des compositions de poudre de dispersion pour matériaux de construction, contenant
a) un polymère de base choisi dans le groupe des polymères d'ester vinylique, (co)polymères de (méth)acrylate et/ou de styrène et polymères du chlorure de vinyle, et
b) soit
b1) 2 à 20% en poids, sur base du polymère de base, d'un poly(alcool vinylique) avec un taux d'hydrolyse de 85 à 94% en moles et une viscosité Höppler de 2 à 40 mPa.s, soit
b2) 2 à 20% en poids, sur base du polymère de base, de sels alcalins ou alcalino-terreux des produits de condensation acide phénolsulfonique-formaldéhyde, ainsi que
c) 3 à 30% en poids, sur base du poids total des constituants polymériques, d'un agent antiadhérent finement divisé,
caractérisée en ce que
d) 1 à 20% en poids, sur base du polymère de base, sont constitués de polypropylèneglycol.

2. Utilisation suivant la revendication 1, caractérisée en ce que le polypropylèneglycol d) est utilisé en des quantités de 2 à 8% en poids, sur base du polymère de base.

3. Utilisation suivant la revendication 1 ou 2, caractérisée en ce que le polypropylèneglycol d) possède un poids moléculaire de 300 à 30 000.

4. Utilisation suivant les revendications 1 à 3, caractérisée en ce que, comme polymère de base, on introduit des copolymères acétate de vinyle-éthylène, lesquels contiennent facultativement encore d'autres esters vinyliques ou du chlorure de vinyle, ou des copolymères chlorure de vinyle-éthylène, lesquels contiennent facultativement encore des esters vinyliques d'acides alcoylcarboxyliques en C₃-C₈, ou des copolymères styrène-acrylate.

5. Utilisation suivant les revendications 1 à 4, caractérisée en ce que l'on introduit encore jusqu'à 30% en poids, sur base du polymère de base, d'un liquéfiant du ciment.

6. Utilisation suivant les revendications 1 à 5, caractérisée en ce que l'on introduit encore jusqu'à 10% en poids, sur base du polymère de base, de copolymères complètement saponifiés d'esters 1-alcoylvinyliques et d'esters vinyliques avec une viscosité Höppler de 1 à 25 mPa.s, déterminée en solution à 4%.

7. Utilisation suivant les revendications 1 à 6, caractérisée en ce que l'on introduit encore jusqu'à 2% en poids, sur base du polymère de base, d'un agent antimousse.

8. Utilisation suivant les revendications 1 à 7, caractérisée en ce que la composition redispersable de poudre de dispersion est utilisée dans des mortiers secs prémélangés qui contiennent du ciment Portland comme liant inorganique.
